(19) **Europäisches Patentamt**
**European Patent Office**
**Office européen des brevets**

(11) **EP 4 432 423 A1**

(12) **EUROPEAN PATENT APPLICATION**
published in accordance with Art. 153(4) EPC

(43) Date of publication:
**18.09.2024 Bulletin 2024/38**

(21) Application number: **23891821.3**

(22) Date of filing: **11.10.2023**

(51) International Patent Classification (IPC):
*H01M 10/54* (2006.01)   *C22B 7/00* (2006.01)
*B09B 3/40* (2022.01)   *H01M 4/525* (2010.01)
*H01M 4/36* (2006.01)   *H01M 10/052* (2010.01)
*H01M 4/02* (2006.01)   *B09B 101/16* (2022.01)

(52) Cooperative Patent Classification (CPC):
**B09B 3/40; C22B 7/00; H01M 4/02; H01M 4/36;**
**H01M 4/525; H01M 10/052; H01M 10/54;**
B09B 2101/16

(86) International application number:
**PCT/KR2023/015561**

(87) International publication number:
**WO 2024/106752 (23.05.2024 Gazette 2024/21)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.11.2022   KR 20220153126**
**09.05.2023   KR 20230059549**

(71) Applicant: **LG Energy Solution, Ltd.**
**Seoul 07335 (KR)**

(72) Inventors:
• **YU, Hyemin**
**Daejeon 34122 (KR)**

• **KIM, Yeon Jun**
**Daejeon 34122 (KR)**
• **YANG, Doo Kyung**
**Daejeon 34122 (KR)**
• **KIM, Min Seo**
**Daejeon 34122 (KR)**
• **CHOI, Jeong Mi**
**Daejeon 34122 (KR)**
• **SEONG, Eunkyu**
**Daejeon 34122 (KR)**

(74) Representative: **Hoffmann Eitle**
**Patent- und Rechtsanwälte PartmbB**
**Arabellastraße 30**
**81925 München (DE)**

(54) **RECYCLED POSITIVE ELECTRODE ACTIVE MATERIAL, RECYCLING METHOD THEREOF, AND SECONDARY BATTERY INCLUDING SAME**

(57)   The present invention relates to a recycled cathode active material, a method of recycling a cathode active material, and a secondary battery including the recycled cathode active material. Specifically, the method of recycling a cathode active material according to the present invention includes step (a) of separating a current collector from a cathode active material layer and recovering a cathode active material in the cathode active material layer by thermally decomposing a binder and a conductive material in the cathode active material layer by heat-treating a waste cathode including the current collector and the cathode active material layer formed on the current collector; and step (b) of adding a lithium precursor and a Co-containing coating agent to the recovered cathode active material and performing annealing.

According to the present invention, the present invention has an effect of providing a method of recycling a cathode active material. According to the method of the present invention, by heat-treating a waste cathode, a cathode active material is recovered. Then, a lithium precursor and a Co-containing coating agent are added to the recovered cathode active material, and annealing is performed. Through this process, process advantages may be obtained, and recovery of a crystal structure and recovery of a surface coating layer may be achieved simultaneously. As a result, the initial capacity and resistance characteristics of a secondary battery may be improved. In addition, eco-friendliness may be secured by not using acids in recovery and recycling processes,

EP 4 432 423 A1

process cost may be reduced because neutralization and wastewater treatment are not required accordingly, no metal element is discarded by recycling a cathode active material in an intact state without disassembling the cathode active material, the risk of toxic gas generation or explosion may be excluded by not using an organic solvent, and economic feasibility and productivity may be greatly improved by omitting a washing process.

[FIG. 3]

**Description**

[Technical Field]

[Cross-Reference to Related Applications]

This application claims priority to Korean Patent Application No. 10-2022-0153126, filed on November 15, 2022, and Korean Patent Application No. 10-2023-0059549, re-filed on May 9, 2023, based on the priority of the above patent, in the Korean Intellectual Property Office, the disclosures of each of which are incorporated herein by reference.

The present invention relates to a recycled cathode active material, a method of recycling a cathode active material, and a secondary battery including the recycled cathode active material. More particularly, the present invention relates to a method of recycling a cathode active material by heat-treating a waste cathode including a current collector and a cathode active material layer coated thereon to recover a cathode active material; simultaneously adding a lithium precursor and a Co-containing coating agent; and performing annealing. Through this process, process advantages may be obtained, and recovery of a crystal structure and recovery of a surface coating layer may be achieved at the same time. As a result, the initial capacity and resistance characteristics of a secondary battery may be improved. In addition, according to the method of the present invention, eco-friendliness may be secured by not using acids in recovery and recycling processes, process cost may be reduced because neutralization and wastewater treatment are not required accordingly, no metal element is discarded by recycling a cathode active material in an intact state without disassembling the cathode active material, the risk of toxic gas generation or explosion may be excluded by not using an organic solvent, and economic feasibility and productivity may be greatly improved by omitting a washing process.

[Background Art]

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

In the cathode active material layer, a lithium-based oxide is mainly used as an active material. In the anode active material layer, a carbon material is mainly used as an active material. In general, the lithium-based oxide contains a rare metal such as cobalt, nickel, or manganese. Accordingly, studies on recovery and recycling of rare metals from the cathodes of lithium secondary batteries that are discarded after use or cathode scraps (hereinafter referred to as "waste cathodes") generated when manufacturing lithium secondary batteries are being actively conducted.

According to the related arts for recovering rare metals from a waste cathode, after dissolving a waste cathode using hydrochloric acid, sulfuric acid, or nitric acid, rare metals such as cobalt, manganese, and nickel are extracted using an organic solvent, and then the extracted metals are used as raw materials for synthesizing a cathode active material.

However, in the case of the method of extracting rare metals using an acid, a neutralization process and a wastewater treatment process are necessarily required due to environmental pollution problems, which greatly increases process costs. In addition, lithium, which is the main metal of a cathode active material, cannot be recovered by the above method.

To solve these drawbacks, methods (direct recycling methods) of directly recycling a cathode active material from a waste cathode without decomposing the cathode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled cathode active material, which degrades the rate performance of a battery. In addition to the above disadvantages, waste gas is generated, and energy consumption is excessive.

In addition, when using the solvent dissolution method, a recycled cathode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled cathode active material, and there is a risk of explosion due to hydrogen gas generated in a process of removing aluminum foil.

In addition, the crushing & screening method can be performed through the simplest process among the above methods. However, it is difficult to completely separate a current collector and a cathode active material, the particle size distribution of the cathode active material is changed during a crushing process, and the battery characteristics of the recycled cathode active material are degraded due to a residual binder.

## EP 4 432 423 A1

Therefore, there is an urgent need to develop a method of safely recycling a cathode active material having improved rate performance in an environment-friendly manner at a low cost through a simple process without loss of metal elements from a waste cathode.

[Disclosure]

[Technical Problem]

Therefore, the present invention has been made in view of the above problems, and it is one object of the present invention to provide a method of recycling a cathode active material by heat-treating a waste cathode including a current collector and a cathode active material layer coated thereon to recover a cathode active material; simultaneously adding a lithium precursor and a Co-containing coating agent; and performing annealing. Through this process, process advantages may be obtained, and recovery of a crystal structure and recovery of a surface coating layer may be achieved at the same time. As a result, the initial capacity and resistance characteristics of a secondary battery may be improved. In addition, according to the method of the present invention, eco-friendliness may be secured by not using acids in recovery and recycling processes, process cost may be reduced because neutralization and wastewater treatment are not required accordingly, no metal element is discarded by recycling a cathode active material in an intact state without disassembling the cathode active material, the risk of toxic gas generation or explosion may be excluded by not using an organic solvent, and economic feasibility and productivity may be greatly improved by omitting a washing process.

It is another object of the present invention to provide a secondary battery having excellent initial capacity and resistance characteristics.

The above and other objects can be accomplished by the present invention described below.

[Technical Solution]

I) In accordance with one aspect of the present invention, provided is a method of recycling a cathode active material, the method including step (a) of separating a current collector from a cathode active material layer and recovering a cathode active material in the cathode active material layer by thermally decomposing a binder and a conductive material in the cathode active material layer by heat-treating a waste cathode including the current collector and the cathode active material layer formed on the current collector; and step (b) of adding a lithium precursor and a coating agent to the recovered cathode active material and performing annealing.

II) In I), the cathode active material layer may include one or more selected from the group consisting of a nickel·cobalt·manganese (NCM)-based cathode active material, a nickel·cobalt·aluminum (NCA)-based cathode active material, and a nickel·cobalt·manganese·aluminum (NCMA)-based cathode active material, and may include 60 mol% or more of Ni based on 100 mol% in total of metals other than Li.

III) In I) or II), in step (a), heat treatment may be performed at 300 to 650 °C under an oxygen atmosphere.

IV) In I) to III), the oxygen may be oxygen ($O_2$) having a purity of 59 % or more.

V) In I) to IV), the cathode active material recovered in step (a) may include single particles.

VI) In I) to V), in step (b), the lithium precursor may be added in an amount of 1 mol% to 40 mol% based on 100 mol% in total of lithium contained in the recovered cathode active material.

VII) In I) to VI), in step (b), the coating agent may be a Cobalt-containing coating agent.

VIII) In I) to VII), in step (b), the coating agent may be added in an amount corresponding to 1 to 25,000 ppm based on a total amount of the recovered cathode active material and the additionally added lithium precursor.

IX) In I) to VIII), the lithium precursor may include one or more of $LiOH$, $Li_2CO_3$, $LiNO_3$, and $Li_2O$.

X) In I) to IX), the coating agent may be a Cobalt-containing coating agent and may include one or more selected from the group consisting of $Co(OH)_2$, $Co_2O_3$, $Co_3(PO_4)_2$, $CoF_3$, $CoOOH$, $Co(OCOCH_3)_2 \cdot 4H_2O$, $Co(NO_3) \cdot 6H_2O$, $Co_3O_4$, $Co(SO_4)_2 \cdot 7H_2O$, and $CoC_2O_4$.

XI) In I) to X), the annealing may be performed at 400 to 800 °C.

XII) In accordance with another aspect of the present invention, provided is a cathode active material including one or more selected from the group consisting of a nickel·cobalt·manganese (NCM)-based cathode active material, a nickel·cobalt·aluminum (NCA)-based cathode active material, and a nickel·cobalt·manganese·aluminum (NCMA)-based cathode active material and including 60 mol% or more of Ni based on 100 mol% in total of metals other than Li, wherein the cathode active material includes a coating agent.

XIII) In XII), the coating agent may be a Cobalt-containing coating agent.

XIV) In XII) or XIII), the coating agent may be a Cobalt-containing coating agent and may include one or more selected from the group consisting of $Co(OH)_2$, $Co_2O_3$, $Co_3(PO4)_2$, $CoF_3$, $CoOOH$, $Co(OCOCH_3)_2 \cdot 4H_2O$, $Co(NO_3) \cdot 6H_2O$,

$Co_3O_4$, $Co(SO_4)_2 \cdot 7H_2O$, and $CoC_2O_4$.

XV) In XII) to XIV), the cathode active material may include single particles.

XVI) In XII) to XV), the cathode active material may be a recycled cathode active material.

XVII) In accordance with yet another aspect of the present invention, provided is a secondary battery including the cathode active material according to any one of XII) to XVI).

[Advantageous Effects]

According to the present invention, the present invention has an effect of providing a method of recycling a cathode active material. According to the method of the present invention, by heat-treating a waste cathode including a current collector and a cathode active material layer coated thereon, a cathode active material is recovered. Then, a lithium precursor and a Co-containing coating agent are added at the same time, and annealing is performed. Through this process, process advantages can be obtained, and recovery of a crystal structure and recovery of a surface coating layer can be achieved simultaneously. As a result, the initial capacity and resistance characteristics of a secondary battery can be improved. In addition, eco-friendliness can be secured by not using acids in recovery and recycling processes, process cost can be reduced because neutralization and wastewater treatment are not required accordingly, no metal element is discarded by recycling a cathode active material in an intact state without disassembling the cathode active material, the risk of toxic gas generation or explosion can be excluded by not using an organic solvent, and economic feasibility and productivity can be greatly improved by omitting a washing process.

[Description of Drawings]

The following drawings attached to this specification illustrate embodiments of the present invention, and are presented to further understand the technical idea of the present invention in combination with the detailed description described below. Accordingly, the present invention is not limited to these drawings.

FIG. 1 is an SEM image of a fresh cathode active material of Comparative Example 1.

FIG. 2 is an SEM image of a cathode active material from which a binder and a conductive material have been removed by heat-treating a waste cathode.

FIG. 3 includes SEM images of cathode active materials obtained by adding a lithium precursor and a Co-containing coating agent to a cathode active material from which a binder and a conductive material have been removed by heat-treating a waste cathode, and then performing annealing according to Examples 1 to 4.

FIG. 4 is an SEM image of a cathode active material obtained by adding only a lithium precursor to a cathode active material from which a binder and a conductive material have been removed by heat-treating a waste cathode, and then performing annealing according to Comparative Example 2.

FIG. 5 includes SEM images of cathode active materials recycled in Example 4.

FIG. 6 includes SEM images of cathode active materials recycled in Example 5.

FIG. 7 is a graph showing the charging capacity of coin cells including recycled cathode active materials manufactured in Comparative Examples 1 to 3 and Examples 1 to 5 or a fresh cathode active material.

FIG. 8 shows the results of mono cell evaluation for recycled cathode active materials manufactured in Examples 1 and 2 and Comparative Examples 1 and 2 or a fresh cathode active material, and is a graph showing resistance change depending on change in state of charge (SOC, %) at 0.1 sec.

FIG. 9 shows the results of mono cell evaluation for recycled cathode active materials manufactured in Examples 1 and 2 and Comparative Examples 1 and 2 or a fresh cathode active material, and is a graph showing resistance change depending on change in SOC (%) at 30 sec.

FIG. 10 shows the results of mono cell evaluation for recycled cathode active materials manufactured in Examples 1 and 2 and Comparative Examples 1 and 2 or a fresh cathode active material, and is a graph obtained by subtracting the 0.1 sec resistance from the 30 sec resistance.

FIG. 11 is a flowchart for explaining a process for recycling a cathode active material according to the present invention.

[Best Mode]

The present inventors confirmed that, while researching a direct recycling method to obtain a recycled cathode active material having excellent battery performance by directly recycling a cathode active material from a waste cathode without decomposing the cathode active material, when a waste cathode including a current collector and a cathode active material layer coated thereon was heat-treated to recover a cathode active material, a lithium precursor and a Co-containing coating agent were added thereto at the same time, and annealing was performed, recovery of a crystal structure and recovery of a surface coating layer was implemented, the initial capacity and resistance characteristics of a secondary battery were improved, and process advantages were obtained. Based on these results, the present inventors conducted further studies to complete the present invention.

Hereinafter, a recycled cathode active material, a method of recycling a cathode active material, and a secondary battery including the recycled cathode active material according to the present invention will be described in detail.

The terms and words which are used in the present specification and the appended claims should not be construed as being confined to common meanings or dictionary meanings but should be construed as meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

Method of recycling cathode active material

The method of recycling a cathode active material according to the present invention includes step (a) of separating a current collector from a cathode active material layer and recovering a cathode active material in the cathode active material layer by thermally decomposing a binder and a conductive material in the cathode active material layer by heat-treating a waste cathode including the current collector and the cathode active material layer formed on the current collector; and step (b) of adding a lithium precursor and a Co-containing coating agent to the recovered cathode active material and performing annealing. In this case, the initial capacity and resistance characteristics of a secondary battery may be excellent, and process advantages, such as reduction in production cost, may be obtained.

Hereinafter, each step of the method of recycling a cathode active material will be described in detail.

(a) Recovering cathode active material from waste cathode

According to the present invention, step (a) of recovering a cathode active material from a waste cathode may preferably be a step of separating a current collector from a cathode active material layer and recovering a cathode active material in the cathode active material layer by thermally decomposing a binder and a conductive material in the cathode active material layer by heat-treating a waste cathode including the current collector and the cathode active material layer formed on the current collector. In this case, a simple process may be implemented, and a binder, a conductive material, and a current collector may be completely removed.

The waste cathode may be preferably a cathode separated from a lithium secondary battery discarded after use, or a defective cathode sheet or a cathode scrap generated in a process of manufacturing a lithium secondary battery, more preferably a cathode scrap remaining after blanking a cathode sheet to obtain a cathode plate.

The cathode active material layer of step (a) may preferably include a cathode active material, a binder, and a conductive material.

For example, the cathode active material may include one or more selected from the group consisting of a nickel·cobalt·manganese (NCM)-based cathode active material, a nickel·cobalt·aluminum (NCA)-based cathode active material, and a nickel·cobalt·manganese·aluminum (NCMA)-based cathode active material.

The cathode active material may include preferably one or more selected from the group consisting of a lithium cobalt oxide such as $LiCoO_2$ (hereinafter referred to as "LCO") ; a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the cathode active material may be a nickel manganese-based lithium composite metal oxide, an NCM-based lithium composite transition metal oxide, or a mixture thereof. In this case, reversible capacity and thermal stability may be excellent.

As another specific example, the cathode active material may be a compound represented by Chemical Formula 1 below.

[Chemical Formula 1]        $Li_aNi_xMn_yCo_zM_wO_{2+\delta}$

In the Chemical Formula 1, M includes one or more selected from the group consisting of B, W, Al, Ti, and Mg, $1<a<1.1$, $0<x<0.95$, $0<y<0.8$, $0<z<1.0$, $0 \leq w \leq 0.1$, $-0.02 \leq \delta \leq 0.02$, and $x+y+z+w=1$.

For example, based on 100 mol% in total of metals other than Li, the cathode active material may include Ni in an amount of 60 mol% or more, preferably 80 mol% or more, more preferably 81 mol% or more, still more preferably 81 to 95 mol%. Within this range, initial capacity and resistance characteristics may be excellent.

In the present disclosure, the Ni content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used to measure the Ni content.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, in step (a), the heat treatment may be performed at 300 to 650 °C, preferably 400 to 620 °C, more preferably 500 to 600 °C under an oxygen atmosphere. Within this range, since a current collector is not melted and only a binder is removed, a cathode active material may be easily separated from the current collector.

The heat treatment time may be preferably 10 minutes to 5 hours, more preferably 30 minutes to 5 hours, still more preferably 30 minutes to 2 hours. Within this range, since a current collector is not melted and only a binder is removed, a cathode active material may be easily separated from the current collector.

In the present disclosure, the heat treatment time is time of heat treatment performed at the corresponding heat treatment temperature, and does not include time required to reach the corresponding heat treatment temperature.

For example, the cathode active material recovered in step (a) may include single particles. In this case, particle strength may be improved, and occurrence of cracks and particle breakage in the cathode active material by rolling may be reduced.

In the present disclosure, the single particle follows the definition commonly used in the technical field to which the present invention pertains. Specifically, the single particle may mean a single particle that is enlarged or has a large particle size, that is, a single structure, rather than in the form of an aggregated secondary particle. Here, the secondary particles refer to aggregates in which particles are agglomerated together.

In the present disclosure, particle thickening methods commonly used to manufacture single particles in the technical field to which the present invention pertains may be used without particular limitation.

The single particles may have an average particle diameter ($D_{50}$) of preferably 2 to 10 pm, more preferably 2 to 8 pm, still more preferably 3 to 6 pm.

In the present disclosure, the average particle diameter ($D_{50}$) may be defined as a particle diameter corresponding to 50 % of volume accumulation in a particle size distribution curve. For example, the average particle diameter ($D_{50}$) may be measured using a laser diffraction method. Specifically, as the method of measuring the average particle diameter ($D_{50}$) of the cathode active material, cathode active material particles are dispersed in a dispersion medium, the dispersed particles are placed in a commercially available laser diffraction particle size measuring device (e.g., Microtrac MT 3000), and the particles are irradiated with an ultrasonic wave of about 28 kHz with an output of 60 W. Then, an average particle diameter ($D_{50}$) corresponding to 50 % of volume accumulation in the measuring device may be calculated.

For example, the cathode active material may include single particles in an amount of 10 to 100 % by weight, preferably 10 to 80 % by weight, more preferably 20 to 60 % by weight. Within this range, particle strength may be improved, and occurrence of cracks and particle breakage in the cathode active material by rolling may be reduced.

For example, in the heat treatment, the purity of oxygen may be 59 % or more, preferably 70 % or more, more preferably 80 % or more, still more preferably 90 % or more, still more preferably 90 to 99 %. Within this range, the binder and the conductive material may be completely removed, the stability of Ni in the cathode active material may be increased, and advantages, such as reduction in crystal size, may be obtained.

The purity (%) of the oxygen may be expressed as volume% or mol%.

The purity of oxygen in the present invention may be measured without particular limitations using measurement methods commonly used in the technical field to which the present invention pertains.

**(b) Adding lithium precursor and Co-containing coating agent to recovered cathode active material and performing annealing**

The method of recycling a cathode active material according to the present invention includes step (b) of adding a lithium precursor and a Co-containing coating agent to the recovered cathode active material and performing annealing. In this case, recovery of a crystal structure and recovery of a surface coating layer may be implemented, the initial capacity and resistance characteristics of a secondary battery may be excellent, and process advantages, such as reduction in production cost, may be obtained.

The lithium precursor may preferably include one or more selected from the group consisting of LiOH, $Li_2CO_3$, $LiNO_3$ and $Li_2O$, more preferably LiOH. In this case, by supplementing lithium in the recycled cathode active material, crystallinity may be increased, or a crystal structure may be recovered, thereby improving crystallinity. Thus, the battery characteristics of the recycled cathode active material may be improved.

The lithium precursor may be preferably added in an amount corresponding to the reduced amount of lithium based on a molar ratio of lithium in the cathode active material of step (a) based on the amount of lithium in the recovered cathode active material. More preferably, the lithium precursor may be added in an amount corresponding to a molar ratio of lithium of 0.0001 to 0.2 based on the molar ratio of lithium in the cathode active material of step (a). Within this range, by supplementing lithium in the recycled cathode active material, crystallinity may be increased, or a crystal structure may be recovered, thereby improving crystallinity. Thus, the battery characteristics of the recycled cathode active material may be improved.

The lithium precursor may be added in an amount corresponding to preferably 1 to 40 mol%, more preferably 1 to 15 mol%, still more preferably 1 to 10 mol% based on 100 mol% in total of lithium contained in the recovered cathode active material. Within this range, since a residual precursor that causes an increase in the resistance of the recycled cathode active material is not left, battery characteristics may be improved.

The Co-containing coating agent may include preferably one or more selected from the group consisting of $Co(OH)_2$, $Co_2O_3$, $Co_3(PO_4)_2$, $CoF_3$, $CoOOH$, $Co(OCOCH_3)_2 \cdot 4H_2O$, $Co(NO_3) \cdot 6H_2O$, $Co_3O_4$, $Co(SO_4)_2 \cdot 7H_2O$, and $CoC_2O_4$, more preferably $Co(OH)_2$. In this case, the surface of the cathode active material may be uniformly coated. In addition, due to an increase in conductivity, battery performance, such as output characteristics and lifespan characteristics, may be improved. In addition, corrosion and side reactions on the surface of the cathode active material caused by hydrogen fluoride may be suppressed.

For example, in step (b), the Co-containing coating agent may be added in an amount that allows a Co content to be 1 to 25,000 ppm, preferably 1 to 15,000 ppm, more preferably 100 to 10,000 ppm, still more preferably 500 to 7,000 ppm, still more preferably 700 to 3,000 ppm based on a total amount of the recovered cathode active material and the additionally added lithium precursor. In this case, the surface of the cathode active material may be uniformly coated, and thus battery performance may be improved.

In the present disclosure, % and ppm are based on weight unless otherwise defined.

For example, step (b) of performing annealing may be a step of adding a lithium precursor and a Co-containing coating agent to a cathode active material and performing annealing at 400 to 800 °C, preferably 500 to 750 °C, more preferably 550 to 750 °C under air or oxygen ($O_2$). Within this range, the crystal structure of the cathode active material may be recovered, crystallinity may be improved, and the structural stability of the cathode active material and the electrochemical performance of the recycled cathode active material may be improved.

The annealing temperature may be adjusted within a limited range according to the melting points of the lithium precursor and Co-containing coating agent.

For example, in the case of $LiCO_3$ as the lithium precursor, the melting point thereof is 723 °C, and thus annealing may be performed at preferably 700 to 900 °C, more preferably 710 to 780 °C. In the case of LiOH as the lithium precursor, the melting point thereof is 462 °C, and thus annealing may be performed at preferably 400 to 600 °C, more preferably 450 to 480 °C. Within this range, a crystal structure may be recovered, and thus the rate performance of a battery may be excellent. In addition, the structural stability and electrochemical performance of the cathode active material may be improved.

For example, in the case of $Co(OH)_2$ as the Co-containing coating agent, the melting point thereof is 168 °C, and thus annealing may be performed at preferably 400 to 800 °C, more preferably 500 to 750 °C, still more preferably 550 to 750 °C. Within this range, a crystal structure may be recovered, and thus the rate performance of a battery may be excellent. In addition, the structural stability and electrochemical performance of the cathode active material may be improved.

The annealing temperature is preferably a temperature exceeding the melting points of the lithium precursor and Co-containing coating agent. However, when the annealing temperature exceeds 1,000 °C, thermal decomposition of the cathode active material may occur, resulting in deterioration of battery performance. Accordingly, the annealing temperature is preferably 1,000 °C or lower.

The method of adding a lithium precursor and a Co-containing coating agent to the cathode active material recovered in step (b) and performing annealing may be a method of adding a solid or liquid lithium precursor and a solid or liquid co-containing coating agent to the recovered cathode active material, and as another example, may be a method of adding a lithium precursor solution and a Co-containing coating agent solution to the recovered cathode active material and performing spray drying. In this case, particle agglomeration that occurs during a conventional drying process may be reduced, a process of mixing a solid lithium precursor may be omitted, and a product may be obtained in powder form rather than lumps.

For example, when the lithium precursor solution and the Co-containing coating agent solution are prepared, a lithium compound soluble in an aqueous solution or organic solvent may be used.

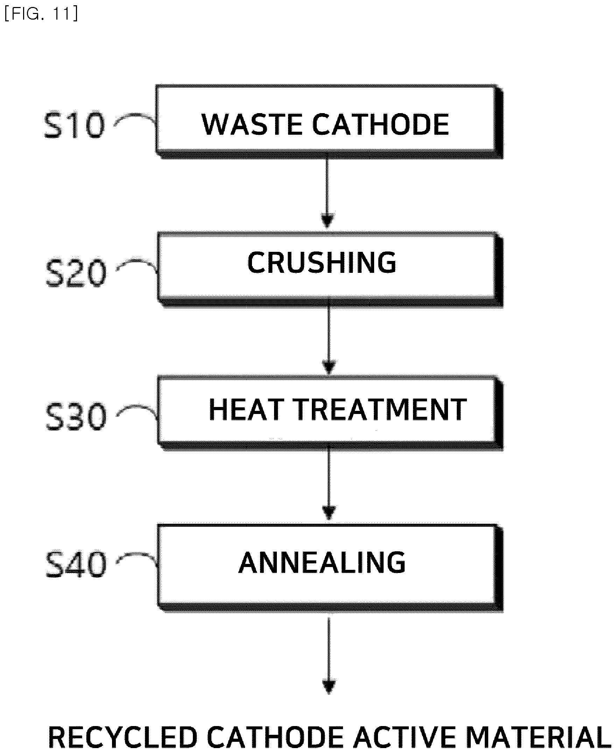

FIG. 11 below is a flowchart for explaining a process for recycling a cathode active material according to one embodiment of the present invention.

Referring to FIG. 11, first, cathode scraps as waste cathodes are prepared (step S10). For example, aluminum foil is coated with slurry prepared by adding N-methyl pyrrolidone (NMP) to an NCM-based lithium composite transition metal oxide containing 60 mol% or more of Ni based on 100 mol% in total of metals other than Li, carbon black, and polyvinylidene fluoride and performing mixing, and then drying is performed in a vacuum oven set to about 120 °C to obtain a cathode sheet. Then, the cathode sheet is punched out to obtain a cathode plate of a certain size. In this process, cathode scraps are generated.

The cathode scrap includes aluminum foil and a cathode active material layer formed on the aluminum foil. After volatilizing a solvent, the cathode active material layer has a structure in which a cathode active material and a conductive material are combined by a binder. Accordingly, when the binder is removed, the cathode active material is separated from the aluminum foil.

Next, the prepared cathode scraps are crushed into pieces of appropriate sizes (step S20). Here, the crushing includes cutting or shredding cathode scraps into easy-to-handle sizes. As a specific example, the crushed cathode scraps may have a size of 1 cm $\times$ 1 cm. For example, the crushing may be performed using a dry crushing device such as a hand-mill, a pin-mill, a disk-mill, a cutting-mill, and a hammer-mill. To increase productivity, a high-speed cutting machine may be used.

Preferably, whether to perform the crushing or the size of the pieces may be determined by considering the handling of cathode scraps and the characteristics of equipment used in the subsequent process. For example, when using equipment capable of continuous processing, cathode scraps must be crushed into smaller pieces because the pieces must have good fluidity.

Next, the cathode scraps are heat-treated to recover a cathode active material (step S30). Here, heat treatment is performed to thermally decompose a binder within the cathode active material layer.

The heat treatment is performed under oxygen having a purity of preferably 80 % or more, more preferably 90 % or more. In this case, Ni stability may be ensured in a waste cathode using a high-nickel cathode, and a binder and a conductive material may be completely removed. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. In contrast, when oxygen is added and heat treatment is performed, both the binder and the conductive material are removed because carbon components in the binder and conductive material reacts with oxygen, are converted into gases such as CO and $CO_2$, and disappears.

The heat treatment is performed at preferably 300 to 650 °C, as a specific example, 590 °C. When the heat treatment is performed at a temperature less than 300 °C, since the binder is not removed, separation of the current collector is difficult. When the heat treatment is performed at a temperature exceeding 650 °C, the current collector melts, making separation of the current collector impossible.

The heat treatment is performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to scraps may be prevented.

The heat treatment may be performed until the binder is completely thermally decomposed. For example, the heat treatment may be performed for preferably 30 minutes or more, more preferably 30 minutes to 5 hours, as a specific example, 30 minutes. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air.

Next, a lithium precursor and a Co-containing coating agent are added to the recovered cathode active material and annealing is performed (step S40).

In the annealing step, a lithium precursor and a Co-containing coating agent are added to the recovered cathode active material and annealing is performed. In this case, during the preceding step S30, lithium in the cathode active material may be lost and the coating layer may be lost. In step S40, the lost lithium and coating layer are replenished. In addition, in step S40, through annealing, the crystal structure of the cathode active material may be recovered. Thus, the properties of the recycled cathode active material may be equal to or better than those of a fresh cathode active material.

During the preceding step S30, deformation structures may be formed on the surface of the cathode active material. As a specific example, on the cathode active material, which is an NCM-based lithium composite transition metal oxide, a spinel structure may be formed by converting Ni into rock salt such as $[NiCO_2 \cdot 2Ni(OH)_2)H_2O]$ by moisture in step S40. When a battery is manufactured in this way, deterioration in battery characteristics, such as capacity reduction, may occur. According to the present invention, through step S40, the crystal structure may be recovered and the surface may be uniformly coated. As a specific example, the cathode active material, which is an NCM-based lithium composite transition metal oxide, is restored to a hexagonal structure, and the surface is uniformly coated with the Co-containing coating agent. Accordingly, the initial characteristics may be restored or improved to the level of a fresh cathode active material, and the structural stability and electrochemical performance of the cathode active material are improved. Here, "fresh" is a concept opposite to "recycling", a fresh material means that the material was made for the first time, and the fresh material is the same word as "raw material" used in the examples.

The lithium precursor of step S40 may include one or more of LiOH, $Li_2CO_3$, $LiNO_2$, and $Li_2O$, as a specific example, LiOH.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added.

For example, when the total amount of lithium included in a recovered cathode active material after heat treatment in step S30 is 100 mol%, the lithium precursor may be added in an amount corresponding to 1 to 40 mol%, preferably 1 to 15 mol%, more preferably 1 to 10 mol%.

As another example, when the molar ratio of lithium to other metals in the fresh cathode active material is 1, the lithium precursor may be added in an amount that allows the molar ratio to be 0.001 to 0.4, preferably 0.01 to 0.2 molar ratio.

As a specific example, when the lithium precursor is added at a molar ratio of 0.09 to 0.1 (based on lithium metal), which is a loss ratio relative to a lithium content in a fresh cathode active material, based on ICP analysis results, the capacity may be increased to a level equivalent to that of the fresh cathode active material. Here, the ICP analysis results have an error value of about ±0.02.

The Co-containing coating agent of step S40 may include one or more selected from the group consisting of $Co(OH)_2$, $Co_2O_3$, $Co_3(PO_4)_2$, $CoF_3$, $CoOOH$, $Co(OCOCH_3)_2 \cdot 4H_2O$, $Co(NO_3) \cdot 6H_2O$, $Co_3O_4$, $Co(SO_4)_2 \cdot 7H_2O$, and $CoC_2O_4$, as a specific example, $Co(OH)_2$.

For example, based on a total amount of the recovered cathode active material and the additionally added lithium precursor, the Co coating agent may be added in an amount that allows the Co content to be 1 to 25,000 ppm, preferably 1 to 15,000 ppm, more preferably 100 to 10,000 ppm, still more preferably 500 to 7,000 ppm, still more preferably 700 to 3,000 ppm.

As a specific example of adding the lithium precursor and the Co-containing coating agent to the recovered cathode active material, a lithium precursor in powder form and a co-containing coating agent in powder form may be mixed, the powder mixture may be mixed with a recovered cathode active material, and then annealing may be performed.

For example, the annealing may be performed at 400 to 800 °C, preferably 500 to 750 °C, more preferably 550 to 750 °C under oxygen. In this case, the temperature should be determined within a limited range according to the types of the lithium precursor and Co-containing coating agent.

The annealing temperature is preferably a temperature exceeding the melting points of the lithium precursor and Co-containing coating agent. However, since performance degradation occurs due to thermal decomposition of the cathode active material at a temperature exceeding 1,000 °C, the annealing temperature should not exceed 1,000 °C. When $Li_2CO_3$ is used as the lithium precursor and $Co(OH)_2$ is used as the Co-containing coating agent, the annealing temperature is preferably 500 to 900 °C, more preferably 550 to 750 °C. In addition, when LiOH is used as the lithium precursor and $Co(OH)_2$ is used as the Co-containing coating agent, the annealing temperature is preferably 400 to 800 °C, more preferably 500 to 750 °C, more preferably 550 to 750 °C.

For example, the annealing time is preferably 1 hour or more, more preferably 15 hours or less, still more preferably 4 to 6 hours. When the annealing time is long, a crystal structure may be sufficiently recovered and the surface may be sufficiently coated, but even long-term annealing does not significantly affect performance. In this case, the same or similar equipment as in step S30 of performing heat treatment may be used as the annealing equipment.

When the molar ratio of lithium to other metals in the cathode active material in the annealing step S40 is 1:1, lithium in the cathode active material reacts with the Co-containing coating agent, and the molar ratio of lithium to other metal in the cathode active material is less than 1:1. In this case, the capacity of a battery containing the recycled cathode active material may not be fully (up to 100 %) expressed. However, in annealing step S40, when an excess of the lithium precursor is added so that lithium is contained in a greater molar ratio of 0.0001 to 0.1 compared to other metals in the cathode active material, a surface protective layer is formed by the Co-containing coating agent, and the molar ratio of lithium to other metals in the cathode active material becomes 1:1, thereby preventing battery capacity degradation.

In the method of recycling a cathode active material according to the present invention, process continuity may be achieved, and the crystal recovery process and the surface coating process may proceed simultaneously in one step.

**Cathode active material**

The cathode active material of the present invention includes one or more selected from the group consisting of a nickel·cobalt·manganese (NCM)-based cathode active material, a nickel·cobalt·aluminum (NCA)-based cathode active material, and a nickel·cobalt·manganese·aluminum (NCMA)-based cathode active material, includes 60 mol% or more of Ni based on 100 mol% in total of metals other than Li, and includes a Co-containing coating agent. In this case, due to an increase in conductivity, battery performance, such as output characteristics and lifespan characteristics, may be improved. In addition, corrosion and side reactions on the surface of the cathode active material caused by hydrogen fluoride may be suppressed.

The cathode active material may include preferably one or more selected from the group consisting of a lithium cobalt oxide such as $LiCoO_2$ (hereinafter referred to as "LCO"); a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. In this case, electrochemical performance, resistance characteristics, and capacity characteristics may be excellent.

As a specific example, the cathode active material may be a compound represented by Chemical Formula 1 below.

[Chemical Formula 1] $\qquad$ $Li_aNi_xMn_yCo_zM_wO_{2+\delta}$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$. In this case, electrochemical performance, resistance characteristics, and capacity characteristics may be excellent.

Based on 100 mol% in total of metals other than Li, the cathode active material may include Ni in an amount of preferably 80 mol% or more, more preferably 81 mol% or more, still more preferably 81 to 95 mol%. Within this range, initial capacity and resistance characteristics may be excellent.

The Co-containing coating agent may include preferably one or more selected from the group consisting of $Co(OH)_2$, $Co_2O_3$, $Co_3(PO_4)_2$, $CoF_3$, $CoOOH$, $Co(OCOCH_3)_2\cdot4H_2O$, $Co(NO_3)\cdot6H_2O$, $Co_3O_4$, $Co(SO_4)_2\cdot7H_2O$, and $CoC_2O_4$, more preferably $Co(OH)_2$. In this case, the surface of the cathode active material may be uniformly coated. In addition, due to an increase in conductivity, battery performance, such as output characteristics and lifespan characteristics, may be improved. In addition, corrosion and side reactions on the surface of the cathode active material caused by hydrogen fluoride may be suppressed.

For example, the cathode active material may include single particles. In this case, particle strength may be improved, and occurrence of cracks and particle breakage in the cathode active material by rolling may be reduced.

In the present disclosure, the single particle follows the definition commonly used in the technical field to which the present invention pertains. Specifically, the single particle may mean a single particle that is enlarged or has a large particle size, that is, a single structure, rather than in the form of an aggregated secondary particle. Here, the secondary particles refer to aggregates in which particles are agglomerated together.

The single particles may have an average particle diameter ($D_{50}$) of preferably 2 to 10 pm, more preferably 2 to 8 pm, still more preferably 3 to 6 pm. Within this range, particle strength may be improved, and occurrence of cracks and particle breakage in the cathode active material by rolling may be reduced.

For example, the cathode active material may include the single particles in an amount of 10 to 100 % by weight, preferably 10 to 80 % by weight, more preferably 20 to 60 % by weight. Within this range, particle strength may be improved, and occurrence of cracks and particle breakage in the cathode active material by rolling may be reduced.

The cathode active material may preferably be a recycled cathode active material. In this case, economic feasibility and productivity may be excellent.

**Secondary battery**

A secondary battery of the present invention includes the cathode active material. In this case, the initial discharge capacity and resistance characteristics of the secondary battery may be excellent, and process advantages may be obtained. In addition, since acids and organic solvents are not used in the process of recovering and recycling a cathode active material, eco-friendliness may be secured. In particular, since an initial washing process is omitted, economic feasibility and productivity may be greatly improved.

Description of the secondary battery of the present invention may include all of the description of the cathode active material and the method of recycling the cathode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Example 1

After blanking a cathode plate, discarded cathode scraps (current collector: aluminum foil, cathode active material: NCMA single particles (nickel content: 80 mol%)) were crushed, oxygen having a purity of 90 % or more was introduced thereto, and the crushed scraps were subjected to oxidation heat treatment at 590 °C for 30 minutes to remove a binder and a conductive material and separate a current collector and a cathode active material. Through these processes, the cathode active material was recovered. At this time, temperature was increased to the heat treatment temperature at a temperature increase rate of 5 °C/min.

Compared to the molar ratio of lithium to other metals in a cathode active material as a raw material, the molar ratio of lithium to other metals in the recovered cathode active material was reduced to 0.02.

To replenish the amount of lithium lost, based on 100 mol% in total of lithium contained in the recovered cathode active material, LiOH as the lithium precursor was added in an amount that allowed the content of lithium to be 5 mol%. At the same time, based on the total amount of the recovered cathode active material and LiOH as the additionally added lithium precursor, $Co(OH)_2$ as the Co-containing coating agent was added in an amount that allowed the content of Co to be 1,000 ppm. Then, annealing was performed at 700 °C for 5 hours under oxygen.

A recycled cathode active material was obtained from the annealed cathode active material.

In the present disclosure, the molar ratio of lithium to other metals in the cathode active material was measured using an ICP analysis device. At this time, an ICP analysis device commonly used in laboratories may be used, but there is no deviation depending on the measurement device or method.

Example 2

A recycled cathode active material was prepared in the same manner as in Example 1 except that, in the annealing step of Example 1, based on the total amount of the recovered cathode active material and LiOH as the additionally added lithium precursor, $Co(OH)_2$ as the Co-containing coating agent was added in an amount that allowed the Co content to be 2,000 ppm.

Example 3

A recycled cathode active material was prepared in the same manner as in Example 1 except that, in the annealing step of Example 1, based on the total amount of the recovered cathode active material and LiOH as the additionally added lithium precursor, $Co(OH)_2$ as the Co-containing coating agent was added in an amount that allowed the Co content to be 5,000 ppm.

Example 4

A recycled cathode active material was prepared in the same manner as in Example 1 except that, in the annealing step of Example 1, based on the total amount of the recovered cathode active material and LiOH as the additionally added lithium precursor, $Co(OH)_2$ as the Co-containing coating agent was added in an amount that allowed the Co content to be 10,000 ppm.

Example 5

A recycled cathode active material was prepared in the same manner as in Example 1 except that, in the annealing step of Example 1, based on the total amount of the recovered cathode active material and LiOH as the additionally added lithium precursor, $Co(OH)_2$ as the Co-containing coating agent was added in an amount that allowed the Co content to be 20,000 ppm.

Comparative Example 1

Fresh NCMA single particles were used as a cathode active material.

Comparative Example 2

A recycled cathode active material was prepared in the same manner as in Example 1 except that, in the annealing step of Example 1, only the lithium precursor was added and annealing was performed.

Comparative Example 3

When a recycled cathode active material was prepared, in the annealing step of Example 1, only the lithium precursor was added to the cathode active material and annealing was performed. Then, based on the total amount of the recovered cathode active material and LiOH as the additionally added lithium precursor, $Co(OH)_2$ as the Co-containing coating agent was added in an amount that allowed the Co content to be 1,000 ppm, and heat treatment was performed at 700 °C for 5 hours for surface coating.

[Test Example I: SEM analysis]

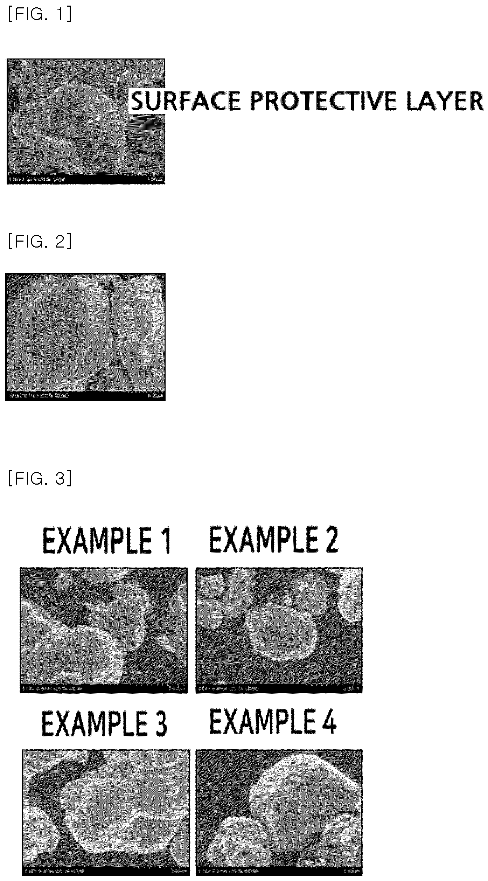

The images of the recycled or fresh cathode active materials prepared in Examples 1 to 5 and Comparative Examples 1 and 2 were captured using an SEM device, and the SEM images are shown in FIGS. 1 to 6. At this time, an SEM device commonly used in laboratories was used. Specifically, s-4200 (HITACHI Co.) was used. However, there was no deviation depending on the measuring device or method.

As shown in FIG. 1 below, in the case of the fresh cathode active material of Comparative Example 1, it can be confirmed that a protective layer is formed on the surface of the cathode active material. In FIG. 1, the arrow points to the surface protective layer.

FIG. 2 shows a cathode active material recovered from cathode scraps after heat treatment. In FIG. 2, it can be confirmed than the binder and the conductive material are removed and the surface protective layer of the cathode active material is lost.

FIG. 3 shows cathode active materials prepared by simultaneously adding a lithium precursor and a Co-containing coating agent to a recovered cathode active material and performing annealing according to Examples 1 to 4. As shown in FIG. 3, it can be confirmed that the crystal structure and the surface protective layer are recovered.

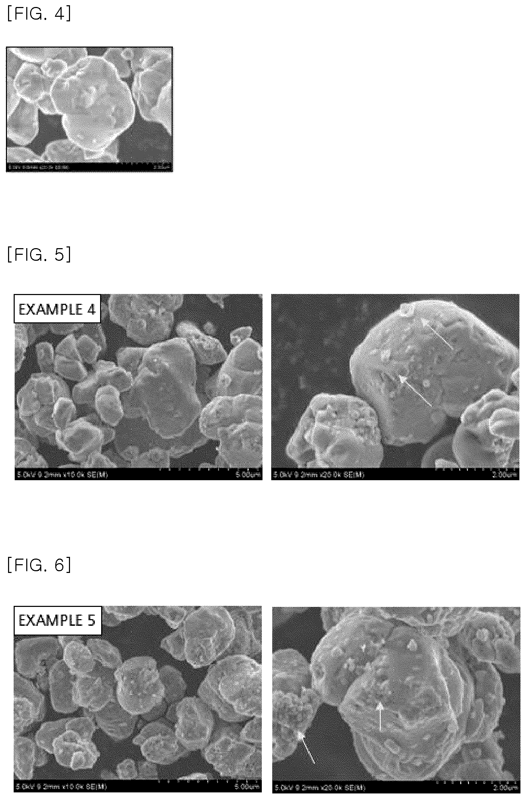

FIG. 4 shows a cathode active material prepared by adding only the lithium precursor to the recovered cathode active material and performing annealing according to Comparative Example 2. As shown in FIG. 4, it can be confirmed that the crystal structure is recovered, but the surface protective layer is lost.

FIG. 5 includes the SEM images of the recycled cathode active material of Example 4. As shown in FIG. 5, it can be confirmed that the crystal structure is recovered and the surface protective layer is formed. In FIG. 5, the arrows point to the surface protective layer formed on the surface of the cathode active material. It can be seen that some clumping has occurred on the surface protective layer. In FIG. 5, the magnification of the left image is 10.0 K, and the magnification of the right image is 20.0 K.

FIG. 6 includes the SEM images of the recycled cathode active material of Example 5. As shown in FIG. 6, a protective layer is formed on the surface of the cathode active material, but agglomeration of the co-containing coating agent occurs on the surface of the cathode active material and uniformity is somewhat reduced. In FIG. 6, the arrows point to the surface protective layer formed on the surface of the cathode active material. In FIG. 6, the magnification of the left image is 10.0 K, and the magnification of the right image is 20.0 K.

[Test Example II: CHC cell evaluation]

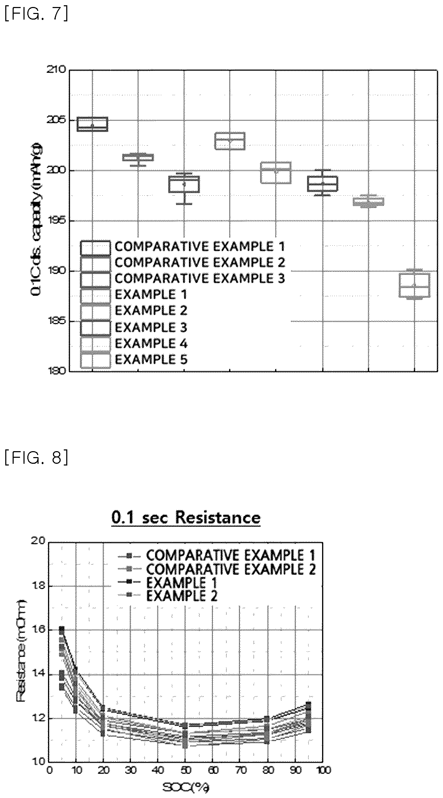

The electrochemical performance of the recycled or fresh cathode active materials obtained in Examples 1 to 5 and Comparative Examples 1 to 3 was measured through CHC cell evaluation described below, and the results are shown in Table 1 and FIG. 7 below.

**[0124]** * CHC cell evaluation: 97.5 % by weight of a recycled cathode active material, 1 % by weight of carbon black as a conductive material, and 1.5 % by weight of PVdF as a binder were prepared and mixed in an NMP to obtain slurry, and aluminum foil was coated with the slurry to manufacture a cathode. Then, a cell (Coin Half Cell, CHC) was manufactured. The electrochemical performance (charge capacity, discharge capacity, and efficiency) was evaluated under the conditions of 3 to 4.3 V and charge/discharge of 0.1 C/0.1 C using an electrolyte solution containing ethylene carbonate (EC) and ethyl methyl carbonate (EMC) in a weight ratio of 3:7 (EC:EMC) and containing other additives.

As shown in FIG. 7 below, the initial capacity of the recycled cathode active materials prepared in Examples 1 to 4 was superior to that of the recycled cathode active material prepared in Comparative Example 2. In addition, compared to Comparative Example 2, process advantages were achieved in Examples 1 to 4. In addition, the initial capacity of the recycled cathode active material prepared in Example 5 was somewhat low. However, by simultaneously adding the lithium precursor and the Co-containing coating agent in the annealing step, process advantages such as time and energy savings and equipment reduction were obtained.

[Table 1]

| Classification | 0.1 C Initial | | | Initial DCH performance (%) compared to Comparative Example 1 |
|---|---|---|---|---|
| | CH | DCH | Eff (%) | |
| Comparative Example 1 | 228.40 | 204.54 | 89.56 | - |
| Comparative Example 2 | 224.45 | 201.34 | 89.70 | 98.43 |
| Comparative Example 3 | 222.20 | 198.68 | 89.42 | 97.29 |
| Example 1 | 224.15 | 203.04 | 90.58 | 99.26 |
| Example 2 | 222.63 | 199.94 | 89.81 | 97.75 |
| Example 3 | 221.59 | 198.54 | 89.50 | 97.16 |
| Example 4 | 219.71 | 196.73 | 89.64 | 96.27 |
| Example 5 | 214.83 | 187.64 | 86.80 | 92.22 |

As shown in Table 1, it was confirmed that the initial capacity of the recycled cathode active materials prepared in Examples 1 to 4 was improved. In particular, in the case of Example 1, compared to Comparative Examples 2 and 3, the initial capacity was greatly improved. In addition, in the case of the recycled cathode active material prepared in Example 5, the initial capacity was somewhat low. However, by simultaneously adding the lithium precursor and the Co-containing coating agent in the annealing step, process advantages such as time and energy savings and equipment reduction were obtained.

[Test Example III: Mono cell evaluation]

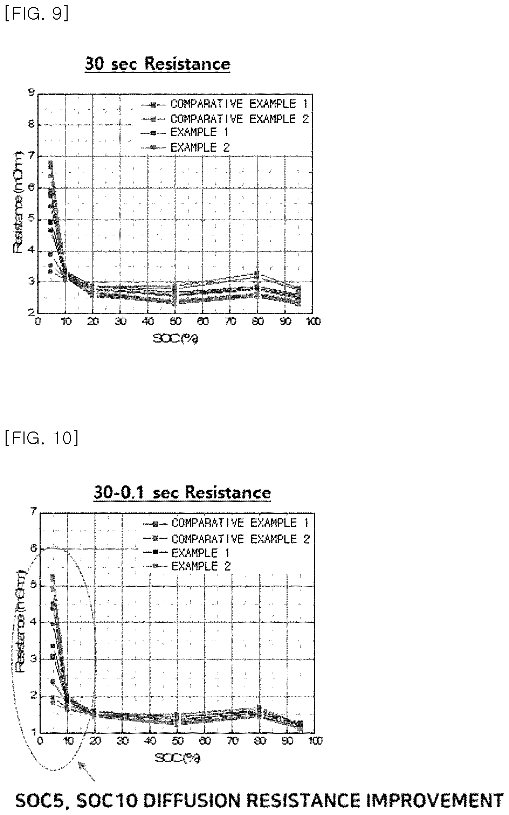

The HPPC resistance characteristics and capacity retention rate of the recycled or fresh cathode active materials prepared in Examples 1 and 2 and Comparative Examples 1 and 2 were evaluated through mono cell evaluation described below, and the results are shown in FIGS. 8 to 10 and Table 2 below. The measurements were performed in triplicate using the mono cells prepared in Examples 1 and 2 and Comparative Examples 1 and 2, and the results are shown in the graphs of FIGS. 8 to 10.

[0128] * Manufacture of mono cell: As in the coin cell condition, cathode active material slurry was applied to aluminum foil having a thickness of 20 $\mu$m. Then, the aluminum foil was dried at 130 °C for 1 hour, and then blanked to a size of 30 mm × 42 mm to manufacture a cathode.

In addition, 95.6 % by weight of a mixture containing natural graphite and artificial graphite in a weight ratio of 5:5, 3.3 % by weight of a conductive material, and 1.1 % by weight of a binder were mixed to prepare anode active material slurry. Then, the slurry was applied to copper foil having a thickness of 10 $\mu$m. The copper foil was rolled and dried, and then blanked to a size of 31 mm × 43 mm to manufacture an anode.

After bonding the manufactured cathode and anode to a separator, an electrolyte solution containing ethylene carbonate (EC) and ethyl methyl carbonate (EMC) in a weight ratio of 3:7 (EC:EMC) was injected thereto to manufacture a polymer cell-type test mono cell.

[0131] * Measurement of resistance change according to SOC: Resistance change according to SOC was measured for the manufactured mono cell. Resistance for each SOC was measured using the hybrid pulse power characterization (HPPC) method. Both discharge resistance and charge resistance were measured by applying a current of 2 C for 10 seconds. SOC was measured at 6 points: 95 %, 80 %, 50 %, 20 %, 10 %, and 5 %.

Resistance was recorded by performing Pulse Discharge (DC-IR measurement) for each SOC section. As shown in Equation 1 below, the resistance was calculated by dividing a voltage change appearing during discharge by discharge current.

$$R=V/I$$

In Equation 1, R is resistance, V is a voltage change during discharge, and I is discharge current.

Diffusion resistance is calculated by subtracting 0.1 sec resistance from 30 sec resistance and is calculated by Equations 2 to 4 below.

$$0.1 \text{ sec resistance} = R(ohm) + R(ct)$$

$$30 \text{ sec resistance} = R(ohm) + R(ct) + R(diff)$$

$$R(diff) = 30 \text{ sec resistance} - 0.1 \text{ sec resistance}$$

In Equations 2 to 4, R(ohm) refers to ohm resistance and means the resistance of a cell. R(ct) refers to charge transfer resistance and means resistance that occurs when lithium moves from an electrolyte solution to a cathode active material. R(diff) refers to diffusion resistance and means resistance that occurs when lithium that has penetrated a cathode active material settles deep into the cathode active material.

**[0136]** * Measurement of capacity retention rate and resistance increase rate: For the manufactured mono cell, charge and discharge cycles were repeated 100 times at 45 °C and 2.5 to 4.25 V with a constant current of 0.3 C, and the capacity and resistance of the mono cell battery were measured. The results are shown in Table 2 below. Here, the capacity retention rate (%) is the ratio of capacity at the 100th cycle to capacity at the 1st cycle. The capacity retention rate compared to Comparative Example 1 (capacity retention vs Comparative Example 1, %) is the ratio of capacity at the 100th cycle of each of Comparative Example 2 and Examples 1 and 2 to capacity at the 100th cycle of Comparative Example 1. Resistance increase rate (%) is the ratio of resistance at the 100th cycle to resistance at the 1st cycle.

As shown in FIGS. 8 to 10 below, in the case of Examples 1 and 2, compared to Comparative Example 2 in which only the lithium precursor was added without adding the Co-containing coating agent during annealing, the R(ct) resistance and R(ohm) resistance were somewhat high, but diffusion resistance was improved. When the diffusion resistance is reduced, resistance that occurs when Li that has penetrated a cathode active material settles deep into the cathode active material is reduced, thereby improving battery performance.

[Table 2]

| Classification | Capacity retention @100 cyc (%) | Capacity retention vs Comparative Example 1 (%; @100 cyc) | Resistance increase @100 cyc (%) |
|---|---|---|---|
| Comparative Example 1 | 95.64 | - | 19.64 |
| Comparative Example 2 | 93.83 | 98.11 | 25.45 |
| Example 1 | 94.84 | 99.16 | 21.44 |
| Example 2 | 94.63 | 98.94 | 25.74 |

As shown in Table 2, in the case of Examples 1 and 2 in which the lithium precursor and the Co-containing coating agent were added to the recovered cathode active material at the same time and annealing was performed, the capacity retention rate and resistance increase rate after 100 cycles were similar or equivalent to those of Comparative Example 1. In addition, the capacity retention rate and resistance increase rate of Examples 1 and 2 were superior to those of Comparative Example 2. Based on the results, it was confirmed that the battery performance was improved in Examples 1 and 2.

**Claims**

1. A method of recycling a cathode active material, comprising:

   step (a) of separating a current collector from a cathode active material layer and recovering a cathode active material in the cathode active material layer by thermally decomposing a binder and a conductive material in the cathode active material layer by heat-treating a waste cathode comprising the current collector and the cathode active material layer formed on the current collector; and
   step (b) of adding a lithium precursor and a cobalt-containing coating agent to the recovered cathode active material and performing annealing.

2. The method according to claim 1, wherein the cathode active material layer comprises one or more selected from the group consisting of a nickel·cobalt·manganese (NCM)-based cathode active material, a nickel·cobalt·aluminum (NCA)-based cathode active material, and a nickel·cobalt·manganese·aluminum (NCMA)-based cathode active material, and comprises 60 mol% or more of Ni based on 100 mol% in total of metals other than Li.

3. The method according to claim 1, wherein, in step (a), heat treatment is performed at 300 to 650 °C under an oxygen atmosphere.

4. The method according to claim 3, wherein the oxygen is oxygen ($O_2$) having a purity of 59 % or more.

5. The method according to claim 1, wherein the cathode active material recovered in step (a) comprises a single particle.

6. The method according to claim 1, wherein, in step (b), the lithium precursor is added in an amount of 1 mol% to 40 mol% based on 100 mol% in total of lithium contained in the recovered cathode active material.

7. The method according to claim 1, wherein, in step (b), the Cobalt-containing coating agent is added in an amount that allows a Cobalt content to be 1 to 25,000 ppm based on a total amount of the recovered cathode active material and the additionally added lithium precursor.

8. The method according to claim 1, wherein the lithium precursor comprises one or more of LiOH, $Li_2CO_3$, $LiNO_3$, and $Li_2O$.

9. The method according to claim 1, wherein the Cobalt-containing coating agent comprises one or more selected from the group consisting of $Co(OH)_2$, $Co_2O_3$, $Co_3(PO_4)_2$, $CoF_3$, $CoOOH$, $Co(OCOCH_3)_2·4H_2O$, $Co(NO_3)·6H_2O$, $Co_3O_4$, $Co(SO_4)_2·7H_2O$, and $CoC_2O_4$.

10. The method according to claim 1, wherein the annealing is performed at 400 to 800 °C.

11. A cathode active material, comprising one or more selected from the group consisting of a nickel·cobalt·manganese (NCM)-based cathode active material, a nickel·cobalt·aluminum (NCA)-based cathode active material, and a nickel·cobalt·manganese·aluminum (NCMA)-based cathode active material and comprising 60 mol% or more of Ni based on 100 mol% in total of metals other than Li,
   wherein a surface of the cathode active material is coated with a Cobalt-containing coating agent.

12. The cathode active material according to claim 11, wherein the Cobalt-containing coating agent comprises one or more selected from the group consisting of $Co(OH)_2$, $Co_2O_3$, $Co_3(PO4)_2$, $CoF_3$, $CoOOH$, $Co(OCOCH_3)_2·4H_2O$, $Co(NO_3)·6H_2O$, $Co_3O_4$, $Co(SO_4)_2·7H_2O$, and $CoC_2O_4$.

13. The cathode active material according to claim 11, wherein the cathode active material comprises a single particle.

14. The cathode active material according to claim 11, wherein the cathode active material is a recycled cathode active material.

15. A secondary battery, comprising the cathode active material according to any one of claims 11 to 14.

[FIG. 1]

[FIG. 2]

[FIG. 3]

[FIG. 4]

[FIG. 5]

[FIG. 6]

[FIG. 7]

[FIG. 8]

[FIG. 9]

## 30 sec Resistance

[FIG. 10]

## 30-0.1 sec Resistance

SOC5, SOC10 DIFFUSION RESISTANCE IMPROVEMENT

[FIG. 11]

S10 — WASTE CATHODE

S20 — CRUSHING

S30 — HEAT TREATMENT

S40 — ANNEALING

RECYCLED CATHODE ACTIVE MATERIAL

<div align="center">

**INTERNATIONAL SEARCH REPORT**

</div>

| | |
|---|---|
| | International application No. |
| | **PCT/KR2023/015561** |

**A.    CLASSIFICATION OF SUBJECT MATTER**

**H01M 10/54**(2006.01)i; **C22B 7/00**(2006.01)i; **B09B 3/40**(2022.01)i; **H01M 4/525**(2010.01)i; **H01M 4/36**(2006.01)i; **H01M 10/052**(2010.01)i; **H01M 4/02**(2006.01)i; **B09B 101/16**(2022.01)i

According to International Patent Classification (IPC) or to both national classification and IPC

**B.    FIELDS SEARCHED**

Minimum documentation searched (classification system followed by classification symbols)

H01M 10/54(2006.01); C01G 51/00(2006.01); H01M 10/052(2010.01); H01M 4/131(2010.01); H01M 4/485(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(anode), 활물질(active material), 재생(recycling), 회수(recovery), 코발트 (cobalt), 코팅(coating)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2019-0101735 A (LG CHEM, LTD.) 02 September 2019 (2019-09-02)<br>See claims 1-10. | 11-12,14-15 |
| Y | | 13 |
| A | | 1-10 |
| Y | KR 10-2144056 B1 (SM LAB CO., LTD.) 12 August 2020 (2020-08-12)<br>See claim 7. | 13 |
| A | KR 10-2021-0147597 A (LG ENERGY SOLUTION, LTD.) 07 December 2021 (2021-12-07)<br>See claim 1. | 1-15 |
| A | KR 10-2022-0050541 A (LG ENERGY SOLUTION, LTD.) 25 April 2022 (2022-04-25)<br>See claims 1-15. | 1-15 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 January 2024** | **16 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/015561** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0099021 A (LIVENERGY CO., LTD.) 12 July 2022 (2022-07-12)<br>    See claims 1-15. | 1-15 |

Form PCT/ISA/210 (second sheet) (July 2022)

**INTERNATIONAL SEARCH REPORT**
Information on patent family members

| International application No. |
| --- |
| **PCT/KR2023/015561** |

| Patent document cited in search report | | | Publication date (day/month/year) | Patent family member(s) | | | Publication date (day/month/year) |
| --- | --- | --- | --- | --- | --- | --- | --- |
| KR | 10-2019-0101735 | A | 02 September 2019 | CN | 111527630 | A | 11 August 2020 |
| | | | | CN | 111527630 | B | 27 May 2022 |
| | | | | EP | 3719882 | A1 | 07 October 2020 |
| | | | | EP | 3719882 | B1 | 14 June 2023 |
| | | | | JP | 2021-508161 | A | 25 February 2021 |
| | | | | JP | 6932419 | B2 | 08 September 2021 |
| | | | | US | 11831014 | B2 | 28 November 2023 |
| | | | | US | 2020-0343553 | A1 | 29 October 2020 |
| | | | | WO | 2019-164313 | A1 | 29 August 2019 |
| KR | 10-2144056 | B1 | 12 August 2020 | CN | 114930574 | A | 19 August 2022 |
| | | | | EP | 4084134 | A1 | 02 November 2022 |
| | | | | JP | 2023-523667 | A | 07 June 2023 |
| | | | | US | 2022-0411284 | A1 | 29 December 2022 |
| | | | | WO | 2021-132761 | A1 | 01 July 2021 |
| KR | 10-2021-0147597 | A | 07 December 2021 | CN | 114375520 | A | 19 April 2022 |
| | | | | EP | 4047716 | A1 | 24 August 2022 |
| | | | | JP | 2022-545205 | A | 26 October 2022 |
| | | | | US | 2022-0336879 | A1 | 20 October 2022 |
| | | | | WO | 2021-241818 | A1 | 02 December 2021 |
| KR | 10-2022-0050541 | A | 25 April 2022 | CN | 115210936 | A | 18 October 2022 |
| | | | | EP | 4164027 | A1 | 12 April 2023 |
| | | | | JP | 2023-524700 | A | 13 June 2023 |
| | | | | US | 2023-0183836 | A1 | 15 June 2023 |
| | | | | WO | 2022-080657 | A1 | 21 April 2022 |
| KR | 10-2022-0099021 | A | 12 July 2022 | | None | | |

Form PCT/ISA/210 (patent family annex) (July 2022)

**EP 4 432 423 A1**

**Patent documents cited in the description**

- KR 1020220153126

- KR 1020230059549